# EUROPEAN PATENT SPECIFICATION

(11) **EP 1 052 374 B1**
(45) Date of publication and mention of the grant of the patent: **16.08.2006**
(21) Application number: 00303942.7
(22) Date of filing: 10.05.2000
(51) Int. Cl.: F01D 9/04, F01D 5/18

(54) **Cooling circuit for steam and air-cooled turbine nozzle stage**
Kühlkreislauf für dampf- und luftgekühlte Turbinenleitschaufeln
Circuit de refroidissement à vapeur et à air pour des aubes de guidage de turbines

(30) Priority: 10.05.1999 US 307719
(43) Date of publication of application: 15.11.2000
(73) Proprietor: GENERAL ELECTRIC COMPANY, Schenectady, NY 12345 (US)
(72) Inventor: Itzel, Gary Michael, Greenville, South Carolina 29680 (US); Yu, Yufeng Phillip, Greenville, South Carolina 29615 (US)
(74) Representative: Goode, Ian Roy

(56) References cited:
- EP-A- 0 392 664
- EP-A- 0 894 946
- US-A- 5 634 766
- PATENT ABSTRACTS OF JAPAN vol. 1998, no. 06, 30 April 1998 (1998-04-30) -& JP 10 037704 A (MITSUBISHI HEAVY IND LTD), 10 February 1998 (1998-02-10)

## Description

The present invention relates to land-based or industrial gas turbines, for example, for electrical power generation, and particularly to a cooling circuit for a nozzle stage of the gas turbine.

Traditionally, discharge air is extracted from the compressor of a turbine for purposes of cooling turbine blades and nozzles. It has also been recognized that hot gas path components of the gas turbine can be cooled by flowing cooling steam in heat exchange relation with the surfaces to be cooled. Combined steam and air-cooling of nozzles in a gas turbine has been proposed, for example, in U.S. Patent No. 5,634,766, of common assignee herewith. In that patent, steam is supplied to a plenum in the outer wall containing an impingement plate with openings for flowing steam through the impingement plate openings against the interior wall surface of the outer wall to cool the latter. The steam then flows into a pair of cavities in the vane and particularly through inserts in the cavities having apertures for impingement-cooling of the surrounding interior walls of the vane. The spent impingement steam flows into a plenum in the inner wall for flow through openings in another impingement plate to impingement-cool the inner wall. Return steam flows through cavities containing insert sleeves having openings for impingement-cooling the adjacent walls of the vane. Air-cooling is supplied to a trailing edge cavity for flow through openings in the trailing edge into the hot gas stream.

While that cooling system is satisfactory, experience has shown that thermal barrier coatings on the leading edges of the vanes tend to erode. Very high thermal gradients thus occur when the nozzle leading edge is cooled from the back side without external insulation along the leading edge. Resulting thermal stresses produce a shortfall in low-cycle fatigue lives. Also, because of the high thermal gradients at the leading edge eroded areas, the nozzle requires a leading edge metal thickness with tight tolerances on wall thickness variations. This significantly increases manufacturing costs and produces high scrap rates. Further, the inner and outer walls of the cooling system of U.S. Pat. No. 5,634,766 require covers serving, in part, as manifolds for the steam supplied to the nozzles. The covers are welded to the bands and the weld joint experiences high thermal stress due to the difference in temperature between the cover running at steam temperature in comparison with the temperature of the nozzle bands. There has thus developed a need for a turbine nozzle cooling system which alleviates the above and other problems associated with cooling turbine nozzles.

JP-A-10037704 discloses a stationary blade of a gas turbine, in which the pressure resisting strength can be decreased by using low-pressure cooling air. JP-A-10037704 does not disclose a combination of air cooling and steam cooling.

In accordance with a preferred embodiment of the present invention, combined steam and air-cooling of nozzles are provided, with air-cooling in part being provided by film-cooling in the hot gas path. To accomplish this, each nozzle vane is comprised of a plurality of cavities extending the length of the vane between the leading and trailing edges of the vane. Compressor discharge air is directed through an impingement plate for impingement against the outer wall surface of the outer wall to cool the outer wall. Post-impingement air then flows through cooling holes formed in the outer wall about the vane, producing a layer or film of cooling air on the radially inner wall surface of the outer wall, i.e., forming a film along the outer band wall in the hot gas flow path. Cooling air is also directed through an insert sleeve extending lengthwise in a leading edge cavity of the vane. The insert sleeve has openings for impingement-cooling of the leading edge. Post-impingement cooling air flows outwardly through holes in the leading edge to form a film flow about the leading edge of the vane in the hot gas path. Air also flows in a trailing edge cavity for flow through openings in the side walls of the trailing edge to form a cooling film flow along the side walls of the trailing edge. Air in the cavity also passes through holes in the trailing edge tip for flow outwardly directly into the hot gas path.

Cavities intermediate the leading and trailing edge cavities are provided with steam for cooling the side surfaces of the vane between the inner and outer walls. Particularly, a steam inlet supplies steam through insert sleeves having openings for impingement-cooling the side walls of the vane. The post-impingement steam flows into a plenum in the inner band for flow through an impingement plate to cool the inner wall. The cooling steam then flows outwardly through insert sleeves in the remaining intermediate cavities of the vane for flow through openings for impingement-cooling of the side surfaces of the vane. An outlet for these remaining cavities carries the spent cooling steam. Consequently, thin-film cooling is provided in combination with steam-cooling of the nozzles.

In a preferred embodiment according to the present invention, there is provided a turbine vane segment comprising inner and outer walls spaced from one another, a vane extending between the inner and outer walls and having leading and trailing edges, the vane including a plurality of discrete cavities between the leading and trailing edges and extending lengthwise of the vane for flowing cooling mediums, an impingement plate having openings therethrough and spaced outwardly of the outer wall defining a chamber with the outer wall for receiving cooling air through the impingement plate openings for impingement-cooling the outer wall, the outer wall having a plurality of holes for flowing post-impingement air from the chamber holes therethrough for film-cooling the outer wall along a hot gas path of the turbine and a pair of the cavities comprising cavities adjacent the leading edge and the trailing edge, respectively, for flowing cooling air to cool respective leading and trailing edges, at least two of the plurality of cavities disposed between the leading and trailing edge cavities and having insert sleeves therein, the sleeves extending substantially between the inner and outer walls and having openings therethrough, the inner wall including a plenum and the two cavities lying in communication with one another through the plenum, the outer wall having an inlet for flowing steam into one of the two cavities and an outlet for flowing spent cooling steam from another of the two cavities, the steam in the two cavities flowing through the openings in the insert sleeves for impingement-cooling side walls of the vane.

In a further preferred embodiment according to the present invention, there is provided a turbine vane segment comprising inner and outer walls spaced from one another, a vane extending between the inner and outer walls and having leading and trailing edges, the vane including a plurality of discrete cavities between the leading and trailing edges and extending lengthwise of the vane for flowing cooling mediums, a pair of the cavities comprising cavities adjacent the leading edge and the trailing edge, respectively, for flowing cooling air to cool respective leading and trailing edges, at least two of the plurality of cavities disposed between the leading and trailing edge cavities and having insert sleeves therein, the sleeves extending substantially between the inner and outer walls and having openings therethrough, the inner wall including a plenum and the two cavities lying in communication with one another through the plenum, the outer wall having an inlet for flowing steam into one of the two cavities and an outlet for flowing spent cooling steam from another of the two cavities, the steam in the two cavities flowing through the openings in the insert sleeves for impingement-cooling side walls of the vane, the leading edge cavity including an air inlet, the leading edge having a plurality of holes for flowing cooling air from the leading edge cavity through the holes for film-cooling external surfaces of the leading edge of the vane.
Embodiments of the invention will now be described, by way of example, with reference to the accompanying drawings, in which:
FIGURE 1 is a fragmentary cross-sectional view of a nozzle vane illustrating a cooling circuit for a gas turbine in accordance with a preferred embodiment of the present invention;
FIGURE 2 is an enlarged fragmentary cross-sectional view illustrating the leading edge cavity and an adjacent cavity of the vane;
FIGURE 3 is an enlarged cross-sectional view illustrating a trailing edge cavity and an adjacent cavity of the vane;
FIGURE 4 is a perspective view of the outer wall illustrating holes through the wall affording air-film cooling of the outer wall;
FIGURE 5 is a cross-sectional view similar to Figure 1 illustrating a further embodiment of the invention; and
FIGURE 6 is a perspective view of the inner wall illustrating holes therethrough for air-film cooling of the inner wall in the embodiment of Figure 5.

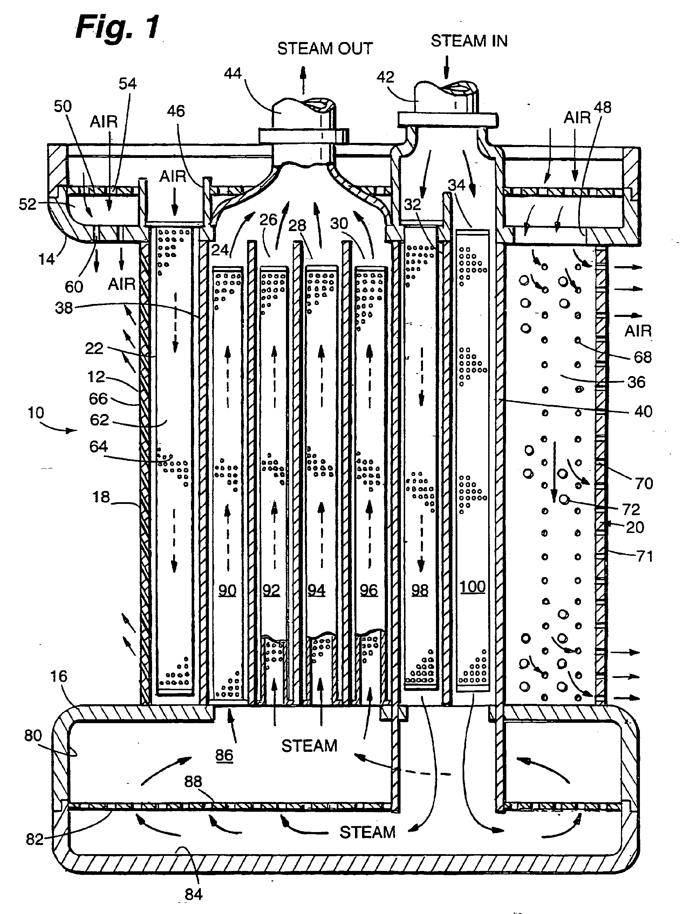

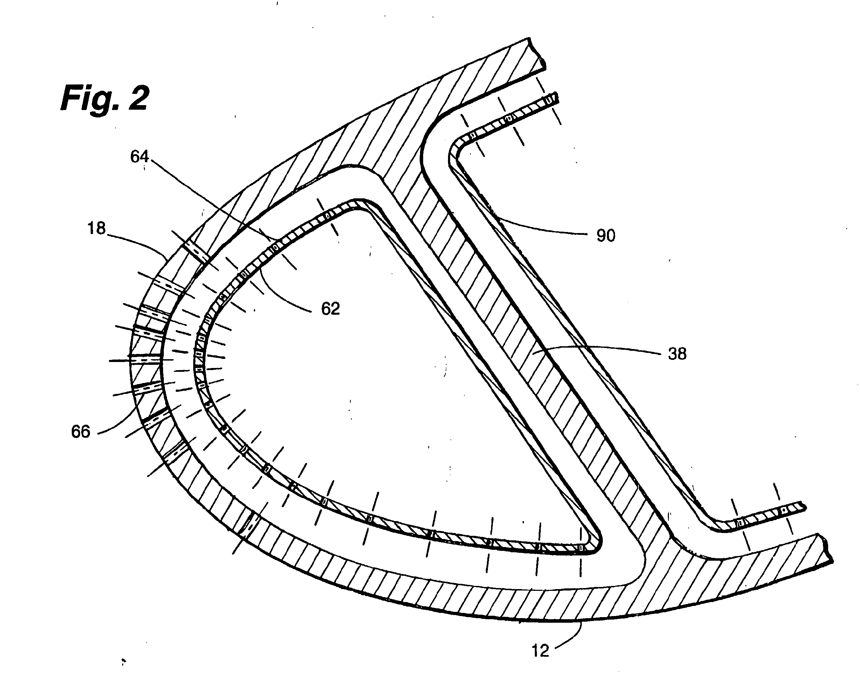

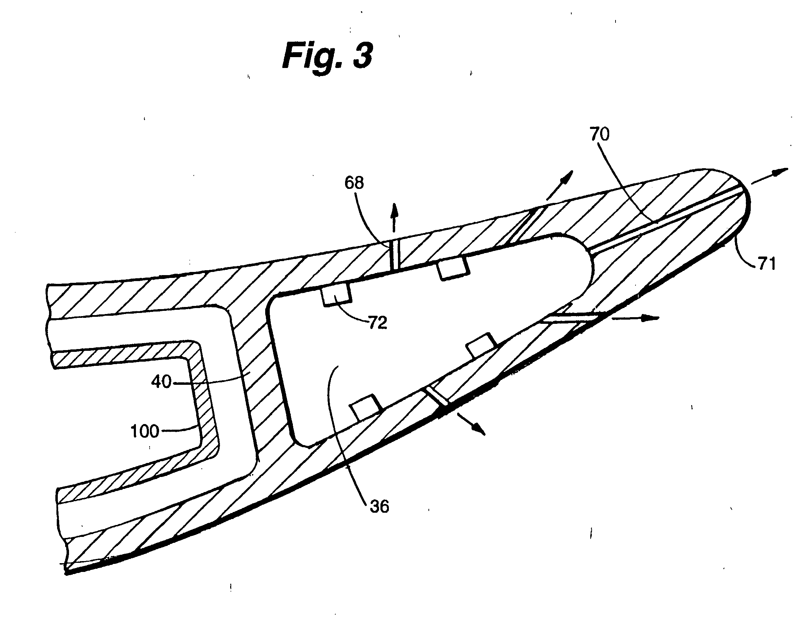

Referring to Figure 1, there is illustrated in cross-section a nozzle segment, generally designated 10, forming one of a plurality of nozzle segments arranged in a circumferentially spaced array and forming a turbine stage. Each segment 10 includes a vane 12 and radially spaced outer and inner walls 14 and 16, respectively. The outer and inner walls form circumferentially extending bands defining with the vanes 12 the annular hot gas path through the nozzles of a turbine stage. In the particular arrangement of nozzle segment 10, the outer wall 14 is supported by a shell of the turbine which structurally supports the vane and the inner wall, the segments 10 being sealed one to the other about the nozzle stage. The vane 12 includes a plurality of cavities extending the length of the vane between the respective outer and inner walls 14 and 16 and which cavities are spaced sequentially one behind the other from the leading edge 18 to the trailing edge 20. From the leading edge to the trailing edge, the cavities include a leading edge cavity 22, four successive intermediate cavities 24, 26, 28, 30, a pair of intermediate cavities 32 and 34 and a trailing edge cavity 36. The walls defining the cavities illustrated in cross-section extend between the pressure and suction side walls of the vane 12, the wall 38 extending between the leading edge cavity 22 and the next adjacent cavity 24 being illustrated in Figure 2. The wall 40 between the trailing edge cavity 36 and the next forward cavity 34 is illustrated in Figure 3. A steam inlet 42 extends through the outer wall 14 for supplying cooling steam to the intermediate pair of cavities 32 and 34. A steam outlet 44 is provided through the outer wall 14 for receiving spent cooling steam from the intermediate cavities 24, 26, 28 and 30. Each of the leading edge cavity 22 and trailing edge cavity 36 has discrete air inlets 46 and 48, respectively.

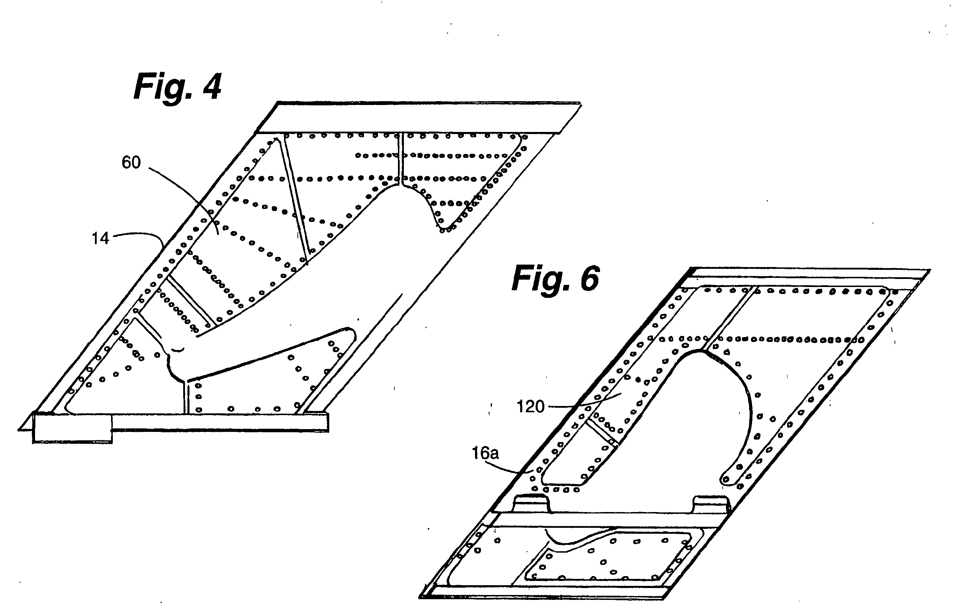

An impingement plate 50 overlies the outer wall 14 in spaced relation thereto defining a chamber 52 between the impingement plate 50 and the outer wall 14. Impingement plate 50 includes a plurality of openings 54. Compressor discharge air is provided along the outer side of the impingement plate 50 for flow through the openings 54 for impingement cooling the outer wall 14. That is, the air flowing through the openings 54 flows against the outer surface of outer wall 14, cooling the outer wall. The spent cooling air then passes through a plurality of holes 60 formed through the outer wall 14 at locations about vane 12. The holes 60 are formed through the outer wall 14 in a pattern, as illustrated in Figure 4. Thus, the spent impingement cooling air flow passes through the holes 60 forming a thin film of air along the inner surface of the outer wall 14, insulating the outer wall 14 from the hot gases flowing past the vane and the outer wall 14. Compressor discharge air supplied to the impingement plate 50 is also supplied to the air inlets 46 and 48 for the leading and trailing edge cavities 22 and 36, respectively. In a preferred embodiment, the inner ends of cavities 22 and 36 are closed by the inner wall 16.

An insert sleeve 62 having a plurality of transverse openings 64 is provided in the leading edge cavity 22 and spaced from the interior walls thereof as illustrated in Figures 1 and 2. Air flowing through inlet 46 flows into the sleeve 62 and laterally outwardly through the openings 64 for impingement-cooling of the leading edge 18. Post-impingement cooling air then flows outwardly through holes 66 spaced one from the other along the length of the leading edge 18 and also laterally one from the other, as illustrated in Figure 2. Consequently, the post-impingement cooling air flowing through holes 66 forms a thin film of air flowing about the leading edge, insulating the leading edge from the hot gases of combustion passing along the vane in the hot gas path of the turbine.

The trailing edge cavity 36 (Figures 1 and 3) is provided with a plurality of holes 68 opening laterally through opposite side walls of the vane and along the length of the vane. Holes 70 also pass directly through the trailing edge tip 71 for cooling the trailing edge. Turbulators 72 are provided in the trailing edge cavity 36 for affording turbulence to the air within the cavity and hence increased cooling effect. The turbulators may take the form of pins extending laterally inwardly from the opposite side walls of the vane into the cavity. The turbulators may take forms other than pins, for example, laterally projecting bars or ribs. Thus, cooling air passing through the impingement plate 50 and through chamber 52 passes through the air inlet 48 into the trailing edge cavity 36. Turbulence is caused in the trailing edge cavity by turbulators 72 for efficiently cooling the side walls of the cavity. Additionally, the air passes through the lateral holes 68 forming a thin film of insulating air external about the side walls of the trailing edge and in the hot gas path. Additionally, the holes 70 pass air directly from the cavity 36 into the hot gas path, cooling the trailing edge as the air passes through holes 70.

Inner wall 16 includes a plenum 80 which is divided by an impingement plate 82 into a first chamber 84 and a second chamber 86. Impingement plate 82, like impingement plate 50, has a plurality of openings 88. Unlike plate 50, impingement plate 82 transmits steam from the first chamber 84 to the second chamber 86 for impingement cooling of the inner wall 16 using steam as the cooling medium. From a review of Figure 1, it will be appreciated that each of the cavities 24, 26, 28, 30, 32 and 34 has an insert sleeve 90, 92, 94, 96, 98 and 100, respectively, each sleeve having a plurality of openings as illustrated. The sleeves are suitably fixed within the cavities and are spaced from the walls of the cavities. Cooling steam enters the steam inlet 42 for flow inwardly through the insert sleeves 98 and 100 in the pair of cavities 32 and 34, respectively. Steam flows through the lateral openings of the insert sleeves 98 and 100 and impinges against the side walls of the vane to cool those walls. The post-impingement cooling steam flows into the plenum 80 of the inner wall directly into the chamber 84. The steam then flows through the openings 88 of the impingement plate for cooling the wall portions of inner wall 16 surrounding the vane. The post-impingement cooling steam then flows outwardly through the sleeves 90, 92, 94 and 96 of the cavities 24, 26, 28 and 30, respectively, and through the openings in those sleeves for impingement-cooling the side walls of the vane 10 between the inner and outer walls. The spent cooling steam flows from the outer ends of the sleeves through the steam outlet 44 to a steam supply or for use in driving turbines in a combined cycle system.

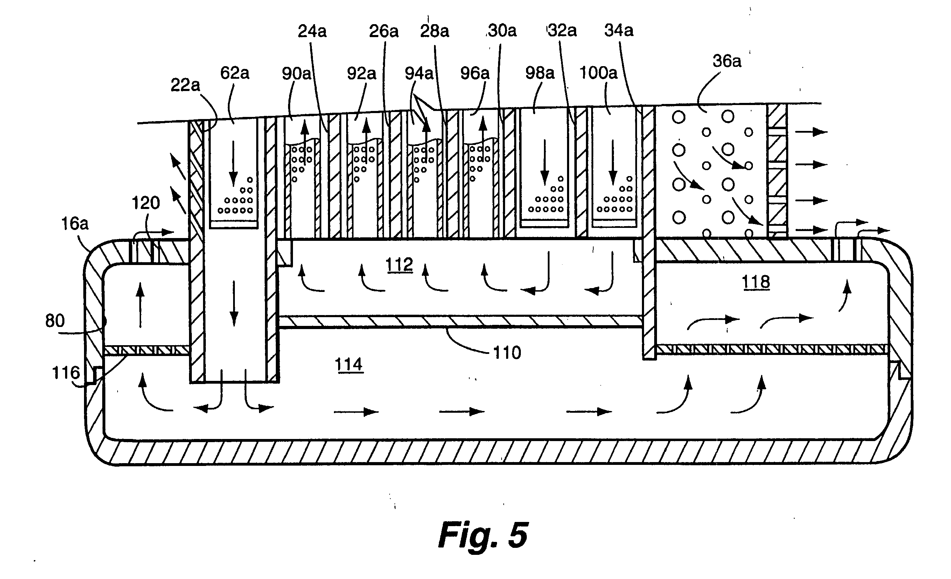

Referring now to FIG. 5, there is illustrated a further form of the present invention wherein like reference numerals as in the embodiment of FIGS. 1-4 apply to like parts followed by the suffix "a." In this embodiment, the outer portion of the nozzle is similar to the nozzle of FIG. 1. However, in this embodiment, the inner wall 16a is air-cooled rather than steam-cooled and film-cooling is provided along the inner wall. In this form of the invention, the steam-cooling circuit includes a direct passage between the pair of cavities 32a and 34a and the steam return cavities 24a, 26a, 28a and 30a. Particularly, the direct passage includes a bottom wall 110 defining a chamber 112 in communication with the outlets from cavities 32a and 44a and with the inlets to cavities 24a, 26a, 28a and 30a. Thus, the cooling steam flows into the inner wall plenum 80a, particularly chamber 112 thereof, for direct return through the vane without cooling the inner wall.

To cool the inner wall, cooling air provided in the leading edge cavity 22a flows into a first chamber 114 in the plenum of the inner wall 16a for passage through the openings of an impingement plate 116. Plate 116 divides plenum 80a into an inner chamber 114 and outer chamber 118. The air thus serves to impingement-cool the inner wall 16a. The post-impingement cooling air also flows through holes 120 (FIG. 6) formed in the inner wall forming thin-film cooling along the inner wall surfaces exposed to the hot gas path.

## Claims

1. A turbine vane segment (10) comprising:
inner and outer walls (14, 16) spaced from one another;
a vane (12) extending between said inner and outer walls and having leading and trailing edges (18, 20), said vane including a plurality of discrete cavities (22, 24, 26, 28, 30, 32, 34, 36) between the leading and trailing edges and extending lengthwise of said vane for flowing cooling mediums;
an impingement plate (50) having openings (54) therethrough and spaced outwardly of said outer wall defining a chamber (52) with said outer wall for receiving cooling air through said impingement plate openings for impingement-cooling the outer wall;
said outer wall having a plurality of holes (60) for flowing post-impingement air from said chamber holes therethrough for film-cooling the outer wall along a hot gas path of the turbine; and
a pair of said cavities (22, 36) comprising cavities adjacent said leading edge and said trailing edge, respectively, for flowing cooling air to cool respective leading and trailing edges;
at least two of said plurality of cavities (32, 24) disposed between said leading and trailing edge cavities and having insert sleeves (98, 90) therein, said sleeves extending substantially between said inner and outer walls and having openings therethrough, said inner wall including a plenum (80) and said two cavities lying in communication with one another through said plenum;
said outer wall having an inlet (42) for flowing steam into one of said two cavities (32) and an outlet (44) for flowing spent cooling steam from another of said two cavities (24), the steam in said two cavities flowing through said openings in said insert sleeves for impingement-cooling side walls of said vane.

2. A segment according to Claim 1 wherein said leading edge cavity includes an air inlet (46), said leading edge having a plurality of holes (66) for flowing cooling air from said leading edge cavity through said holes for film-cooling external surfaces of the leading edge of said vane.

3. A segment according to Claim 2 wherein said holes are angled relative to the length of said vane.

4. A segment according to Claim 2 including an insert sleeve within said leading edge cavity spaced from interior wall surfaces of said leading edge and in communication with said air inlet, said insert sleeve having a plurality of openings therethrough for flowing air received from said leading edge cavity inlet through said sleeve openings into the space between said sleeve and said interior wall surfaces for impingement-cooling said interior wall surfaces of said leading edge prior to flowing cooling air through the holes of said leading edge for film-cooling the exterior surfaces of the leading edge of the vane.

5. A segment according to Claim 1 including an air inlet (48) to said trailing edge cavity for flowing cooling air into said trailing edge cavity, said trailing edge having a plurality of holes (68) spaced from one another along the length of the trailing edge in communication with the air in said trailing edge cavity for film-cooling exterior trailing edge surfaces of said vane.

6. A segment according to Claim 5 wherein said trailing edge has a tip (71) along the length of said vane, and a plurality of holes (70) spaced one from the other along said tip in communication with the air in said trailing edge cavity for cooling the trailing edge tip and flow directly into a hot gas path of the turbine.

7. A segment according to Claim 1 wherein said plenum in said inner wall comprises first and second chambers (84, 86) on opposite sides of an impingement plate in said plenum having a plurality of openings (82) therethrough, said one cavity lying in communication with said first chamber for flowing steam through said impingement plate openings into said second chamber for impingement-cooling of said inner wall, said another cavity lying in communication with said second chamber for returning spent impingement-cooling steam through said another cavity to said outlet.

8. A segment according to Claim 1 wherein said plenum (80a) includes a chamber (114) for receiving air from said leading edge cavity, an impingement plate (116) having openings therethrough in said plenum for flowing cooling air supplied to said chamber through said openings to impingement-cool said inner wall.

9. A segment according to Claim 8 wherein said inner wall has a plurality of holes (120) therethrough for flowing post-impingement cooling air from said plenum through said holes to film-cool the inner wall along said hot gas path.

10. A segment according to Claim 1 wherein said leading edge cavity includes an air inlet (46), said leading edge having a plurality of holes (66) for flowing cooling air from said leading edge cavity through said holes for film-cooling external surfaces of the leading edge of said vane, an air inlet (48) to said trailing edge cavity for flowing cooling air into said trailing edge cavity, said trailing edge having a plurality of holes (68) spaced from one another along the length of the trailing edge in communication with the air in said trailing edge cavity for film-cooling exterior trailing edge surfaces of said vane, said trailing edge cavity including turbulators (72) for inducing turbulent flow in said trailing edge cavity.

11. A turbine vane segment comprising:
inner and outer walls (14, 16) spaced from one another;
a vane (12) extending between said inner and outer walls and having leading and trailing edges (18, 20), said vane including a plurality of discrete cavities (22, 24, 26, 28, 30, 32, 34, 36) between the leading and trailing edges and extending lengthwise of said vane for flowing cooling mediums;
a pair of said cavities (22, 36) comprising cavities adjacent said leading edge and said trailing edge, respectively, for flowing cooling air to cool respective leading and trailing edges;
at least two of said plurality of cavities (32, 34) disposed between said leading and trailing edge cavities and having insert sleeves (98, 90) therein, said sleeves extending substantially between said inner and outer walls and having openings therethrough, said inner wall including a plenum (80) and said two cavities lying in communication with one another through said plenum;
said outer wall having an inlet (42) for flowing steam into one of said two cavities (32) and an outlet (44) for flowing spent cooling steam from another (24) of said two cavities, the steam in said two cavities flowing through said openings in said insert sleeves for impingement-cooling side walls of said vane;
said leading edge cavity including an air inlet (46), said leading edge having a plurality of holes (66) for flowing cooling air from said leading edge cavity through said holes for film-cooling external surfaces of the leading edge of said vane.

12. A segment according to Claim 11 wherein said holes are angled relative to the length of said vane.

13. A segment according to Claim 11 including an insert sleeve (64) within said leading edge cavity spaced from interior wall surfaces of said leading edge and in communication with said air inlet, said insert sleeve having a plurality of openings therethrough for flowing air received from said leading edge cavity inlet through said sleeve openings into the space between said sleeve and said interior wall surfaces for impingement-cooling said interior wall surfaces of said leading edge prior to flowing cooling air through the holes of said leading edge for film-cooling the exterior surfaces of the leading edge of the vane.

14. A segment according to Claim 11 including an air inlet (48) to said trailing edge cavity for flowing cooling air into said trailing edge cavity, said trailing edge having a plurality of holes (68) spaced from one another along the length of the trailing edge in communication with the air in said trailing edge cavity for film-cooling exterior trailing edge surfaces of said vane.

15. A segment according to Claim 14 wherein said trailing edge has a tip along the length of said vane, and a plurality of holes spaced one from the other along said tip in communication with the air in said trailing edge cavity for cooling the trailing edge tip and flow directly into a hot gas path of the turbine.

16. A segment according to Claim 11 wherein said plenum in said inner wall (16) comprises first and second chambers (84, 86) on opposite sides of an impingement plate in said plenum having a plurality of openings (82) therethrough, said one cavity lying in communication with said first chamber for flowing steam through said impingement plate openings into said second chamber for impingement-cooling of said inner wall, said another cavity lying in communication with said second chamber for returning spent impingement-cooling steam through said another cavity to said outlet.

17. A segment according to Claim 11 wherein said plenum (80a) includes a chamber (114) for receiving air from said leading edge cavity, an impingement plate (116) having openings therethrough in said plenum for flowing cooling air supplied to said chamber through said openings to impingement-cool said inner wall.

18. A segment according to Claim 17 wherein said inner wall has a plurality of holes (120) therethrough for flowing post-impingement cooling air from said plenum through said holes to film-cool the inner wall along said hot gas path.

## Patentansprüche

1. Turbinenleitschaufelsegment (10), aufweisend:
Innen- und Außenwände (14, 16), die voneinander beabstandet sind;
eine sich zwischen den Innen- und Außenwänden und Vorder- und Hinterkanten (18, 20) erstreckende Leitschaufel (12), wobei die Leitschaufel mehrere diskrete Hohlräume (22, 24, 26, 28, 30, 32, 34, 36) zwischen den Vorder- und Hinterkanten und sich in Längsrichtung zur Leitschaufel erstreckende Hohlräume enthält, um Kühlmedien strömen zu lassen;
eine Aufprallplatte (50) mit Öffnungen (54) durch sie und in Abstand von der Außenwand angeordnet, die eine Kammer (52) mit der Außenwand zum Aufnehmen von Kühlluft durch die Aufprallplattenöffnungen zum Aufprallkühlen der Außenwand ausbildet;
wobei die Außenwand mehrere Löcher (60) aufweist, um Nachaufprallluft aus den Kammerlöchern durch diese zum Filmkühlen der Außenwand entlang einem Heißgaspfad der Turbine strömen zu lassen; und
ein Paar von Hohlräumen (22, 36), welche an die Vorderkante bzw. Hinterkante angrenzende Hohlräume aufweisen, um Kühlluft zum Kühlen entsprechender Vorder- und Hinterkanten strömen zu lassen;
wobei wenigstens zwei von den mehreren Hohlräumen (32, 24) zwischen den Vorder- und Hinterkantenhohlräumen angeordnet sind und Einsatzhülsen (98, 90) enthalten, wobei sich die Hülsen im Wesentlichen zwischen den Innen- und Außenwänden erstrecken und durch sich führende Öffnungen aufweisen, wobei die Innenwand einen Sammelraum (80) enthält und die zwei Hohlräume über den Sammelraum miteinander in Verbindung stehen;
wobei die Außenwand einen Einlass (42) aufweist, um in einen von den zwei Hohlräumen (32) Dampf strömen zu lassen, sowie einen Auslass (44), um verbrauchten Kühldampf aus einem anderen von den zwei Hohlräumen (24) strömen zu lassen, wobei der Dampf in den zwei Hohlräumen durch die Öffnungen in den Einsatzhülsen zum Aufprallkühlen von Seitenwänden der Leitschaufel strömt.

2. Segment nach Anspruch 1, wobei der Vorderkantenhohlraum einen Lufteinlass (46) enthält, und die Vorderkante mehrere Löcher (66) enthält, um Kühlluft aus dem Vorderkantenhohlraum durch die Löcher zum Filmkühlen externer Oberflächen der Vorderkanten der Leitschaufel strömen zu lassen.

3. Segment nach Anspruch 1, wobei die Löcher in Bezug auf die Länge der Leitschaufel in einem Winkel angeordnet sind.

4. Segment nach Anspruch 2, welches eine Einsatzhülse innerhalb des Vorderkantenhohlraums in Abstand von Innenwandoberflächen der Vorderkante angeordnet und in Verbindung mit dem Lufteinlass enthält, wobei die Einsatzhülse mehrere Öffnungen enthält, um aus dem Vorderkantenhohlraumeinlass aufgenommene Luft durch die Hülsenöffnungen hindurch in den Raum zwischen der Hülse und den Innenwandoberflächen zum Aufprallkühlen der Innenwandoberfläche der Vorderkante strömen zu lassen, bevor sie Kühlluft durch die Löcher der Vorderkante zum Filmkühlen der Außenoberfläche der Vorderkante der Leitschaufel strömen lässt.

5. Segment nach Anspruch 1, welches einen Lufteinlass (48) zu dem Hinterkantenhohlraum enthält, um Kühlluft in den Hinterkantenhohlraum strömen zu lassen, wobei die Hinterkante mehrere voneinander entlang der Länge der Hinterkante in Abstand angeordnete Löcher (68) in Verbindung mit der Luft in dem Hinterkantenhohlraum zum Filmkühlen äußerer Hinterkantenoberflächen der Leitschaufel enthält.

6. Segment nach Anspruch 5, wobei die Hinterkante eine Spitze (71) entlang der Länge der Leitschaufel und mehrere voneinander entlang der Spitze in Abstand angeordnete Löcher (70) in Verbindung mit der Luft in dem Hinterkantenhohlraum zum Kühlen der Hinterkantenspitze und direkten Strömen in einen Heißgaspfad der Turbine enthält.

7. Segment nach Anspruch 1, wobei der Sammelraum in der Innenwand erste und zweite Kammern (84, 86) auf gegenüberliegenden Seiten einer in dem Sammelraum angeordneten Aufprallplatte mit mehreren Öffnungen (82) aufweist, wobei der Hohlraum mit der ersten Kammer in Verbindung steht, um Dampf durch die Aufprallplattenöffnungen in die zweite Kammer zum Aufprallkühlen der Innenwand strömen zu lassen, während der andere Hohlraum mit der zweiten Kammer in Verbindung steht, um verbrauchten Aufprallkühldampf durch den anderen Hohlraum zu dem Auslass zurück zu leiten.

8. Segment nach Anspruch 1, wobei der Sammelraum (80a) eine Kammer (114) zum Aufnehmen von Luft aus dem Vorderkantenhohlraum enthält, während eine Aufprallplatte (116) durch sie in dem Sammelraum führende Öffnungen enthält, um der Kammer durch die Öffnungen zugeführte Kühlluft zum Aufprallkühlen der Innenwand strömen zu lassen.

9. Segment nach Anspruch 1, wobei die Innenwand mehrere durch sie hindurchführende Löcher (120) aufweist, um Nachaufprallkühlluft aus dem Sammelraum durch die Löcher zum Filmkühlen der Innenwand entlang des Heißgaspfades strömen zu lassen.

10. Segment nach Anspruch 1, wobei der Vorderkantenhohlraum einen Lufteinlass (46) enthält, wobei die Vorderkante mehrere Löcher (66) aufweist, um Kühlluft aus dem Vorderkantenhohlraum durch die Löcher hindurch zum Filmkühlen von Außenoberflächen der Vorderkante der Leitschaufel strömen zu lassen, einen Lufteinlass (48) zu dem Hinterkantenhohlraum, um Kühlluft in den Hinterkantenhohlraum strömen zu lassen, wobei die Hinterkante mehrere Löcher (68) enthält, die voneinander entlang der Länge der Hinterkante in Verbindung mit der Luft in dem Hinterkantenhohlraum zum Filmkühlen von Außenhinterkantenoberflächen der Leitschaufel angeordnet sind, wobei der Hinterkantenhohlraum Turbulatoren (72) zum Induzieren einer turbulenten Strömung in dem Hinterkantenhohlraum enthält.

11. Turbinenleitschaufelsegment, aufweisend:
Innen- und Außenwände (14, 16), die voneinander beabstandet sind;
eine sich zwischen den Innen- und Außenwänden und Vorder- und Hinterkanten (18, 20) aufweisende Leitschaufel (12), wobei die Leitschaufel mehrere diskrete Hohlräume (22, 24, 26, 28, 30, 32, 34, 36) zwischen den Vorder- und Hinterkanten und sich in Längsrichtung zur Leitschaufel erstreckende Hohlräume enthält, um Kühlmedien strömen zu lassen;
ein Paar von Hohlräumen (22, 36), welche an die Vorderkante bzw. Hinterkante angrenzende Hohlräume aufweisen, um Kühlluft zum Kühlen entsprechender Vorder- und Hinterkanten strömen zu lassen;
wobei wenigstens zwei von den mehreren Hohlräumen (32, 24) zwischen den Vorder- und Hinterkantenhohlräumen angeordnet sind und Einsatzhülsen (98, 90) enthalten, wobei sich die Hülsen im Wesentlichen zwischen den Innen- und Außenwänden erstrecken und Öffnungen durch sich aufweisen, wobei die Innenwand einen Sammelraum (80) enthält und die zwei Hohlräume über den Sammelraum miteinander in Verbindung stehen;
wobei die Außenwand einen Einlass (42) besitzt, um Dampf in einen von den zwei Hohlräumen (32) strömen zu lassen, und einen Auslass (44), um verbrauchten Kühldampf aus einem anderen von den zwei Hohlräumen (24) strömen zu lassen, wobei der Dampf in den zwei Hohlräumen durch die Öffnungen in den Einsatzhülsen zum Aufprallkühlen von Seitenwänden der Leitschaufel strömt;
wobei der Vorderkantenhohlraum einen Lufteinlass (46) enthält, und die Vorderkante mehrere Löcher (66) enthält, um Kühlluft aus dem Vorderkantenhohlraum durch die Löcher zum Filmkühlen externer Oberflächen der Vorderkanten der Leitschaufel strömen zu lassen.

12. Segment nach Anspruch 11, wobei die Löcher in Bezug auf die Länge der Leitschaufel in einem Winkel angeordnet sind.

13. Segment nach Anspruch 11, welches eine Einsatzhülse innerhalb des Vorderkantenhohlraums in Abstand von Innenwandoberflächen der Vorderkante angeordnet und in Verbindung mit dem Lufteinlass enthält, wobei die Einsatzhülse mehrere Öffnungen enthält, um aus dem Vorderkantenhohlraumeinlass aufgenommene Luft durch die Hülsenöffnungen hindurch in den Raum zwischen der Hülse und den Innenwandoberflächen zum Aufprallkühlen der Innenwandoberfläche der Vorderkante strömen zu lassen, bevor sie Kühlluft durch die Löcher der Vorderkante zum Filmkühlen der Außenoberfläche der Vorderkante der Leitschaufel strömen lässt.

14. Segment nach Anspruch 11, welches einen Lufteinlass (48) zu dem Hinterkantenhohlraum enthält, um Kühlluft in den Hinterkantenhohlraum strömen zu lassen, wobei die Hinterkante mehrere voneinander entlang der Länge der Hinterkante in Abstand angeordnete Löcher (68) in Verbindung mit der Luft in dem Hinterkantenhohlraum zum Filmkühlen äußerer Hinterkantenoberflächen der Leitschaufel enthält.

15. Segment nach Anspruch 14, wobei die Hinterkante eine Spitze (71) entlang der Länge der Leitschaufel und mehrere voneinander entlang der Spitze in Abstand angeordnete Löcher in Verbindung mit der Luft in dem Hinterkantenhohlraum zum Kühlen der Hinterkantenspitze und direkten Strömen in einen Heißgaspfad der Turbine enthält.

16. Segment nach Anspruch 11, wobei der Sammelraum in der Innenwand (16) erste und zweite Kammern (84, 86) auf gegenüberliegenden Seiten einer in dem Sammelraum angeordneten Aufprallplatte mit mehreren Öffnungen (82) aufweist, wobei der Hohlraum mit der ersten Kammer in Verbindung steht, um Dampf durch die Aufprallplattenöffnungen in die zweite Kammer zum Aufprallkühlen der Innenwand strömen zu lassen, während der andere Hohlraum mit der zweiten Kammer in Verbindung steht, um verbrauchten Aufprallkühldampf durch den anderen Hohlraum zu dem Auslass zurück zu leiten.

17. Segment nach Anspruch 11, wobei der Sammelraum (80a) eine Kammer (114) zum Aufnehmen von Luft aus dem Vorderkantenhohlraum enthält, während eine Aufprallplatte (116) Öffnungen in dem Sammelraum enthält, um der Kammer durch die Öffnungen zugeführte Kühlluft zum Aufprallkühlen der Innenwand strömen zu lassen.

18. Segment nach Anspruch 17, wobei die Innenwand mehrere durch sie führende Löcher (120) aufweist, um Nachaufprallkühlluft aus dem Sammelraum durch die Löcher zum Filmkühlen der Innenwand entlang dem Heißgaspfad strömen zu lassen.

## Revendications

1. Segment d'aube de turbine (10) comprenant :
des parois intérieure et extérieure (14, 16) espacées l'une de l'autre ;
une aube (12) s'étendant entre lesdites parois intérieure et extérieure et ayant un bord d'attaque et un bord de fuite (18, 20), ladite aube comprenant une pluralité de cavités discrètes (22, 24, 26, 28, 30, 32, 34, 36) entre les bord d'attaque et bord de fuite et s'étendant dans le sens de la longueur de ladite aube pour l'écoulement d'agents de refroidissement ;
une plaque d'impact (50) comportant des ouvertures (54) la traversant et espacée vers l'extérieur de ladite paroi extérieure définissant une chambre (52) avec ladite paroi extérieure pour recevoir de l'air de refroidissement par lesdites ouvertures de la plaque d'impact pour refroidir par impact la paroi extérieure ;
ladite paroi extérieure comportant une pluralité de trous (60) pour l'écoulement d'air de post-impact provenant desdits trous de chambre afin de refroidir par film la paroi extérieure le long d'un chemin de gaz chauds de la turbine ; et
une paire desdites cavités (22, 36) comprenant des cavités adjacentes audit bord d'attaque et audit bord de fuite, respectivement, pour faire s'écouler de l'air de refroidissement afin de refroidir les bords d'attaque et de fuite respectifs ;
au moins deux des cavités de ladite pluralité de cavités (32, 24) disposées entre lesdites cavités de bords d'attaque et de fuite et comportant des manchons insérés (98, 90) dedans, lesdits manchons s'étendant substantiellement entre lesdites parois intérieure et extérieure et comportant des ouvertures les traversant, ladite paroi intérieure comportant un espace intérieur (80) et lesdites deux cavités communiquant l'une avec l'autre via ledit espace intérieur ;
ladite paroi extérieure comportant une entrée (42) permettant l'écoulement de vapeur dans l'une desdites deux cavités (32) et une sortie (44) permettant l'écoulement de la vapeur de refroidissement usée d'une autre desdites deux cavités (24), la vapeur présente dans lesdites deux cavités passant dans lesdits manchons insérés via lesdites ouvertures pour refroidir par impact les parois latérales de ladite aube.

2. Segment selon la revendication 1, dans lequel ladite cavité de bord d'attaque comprend une entrée d'air (46), ledit bord d'attaque comportant une pluralité de trous (66) pour permettre l'écoulement d'air de refroidissement depuis ladite cavité de bord d'attaque par lesdits trous pour refroidir par film les surfaces externes du bord d'attaque de ladite aube.

3. Segment selon la revendication 2, dans lequel lesdits trous forment un angle par rapport à la longueur de ladite aube.

4. Segment selon la revendication 2, comprenant un manchon inséré dans ladite cavité de bord d'attaque à distance des surfaces de paroi intérieure dudit bord d'attaque et en communication avec ladite entrée d'air, ledit manchon inséré comportant une pluralité d'ouvertures le traversant pour l'écoulement de l'air provenant de ladite entrée de cavité de bord d'attaque par lesdites ouvertures de manchon dans l'espace situé entre ledit manchon et lesdites surfaces de paroi intérieure pour refroidir par impact lesdites surfaces de paroi intérieure dudit bord d'attaque avant de faire d'écouler l'air de refroidissement par les trous dudit bord d'attaque pour refroidir par film les surfaces extérieures du bord d'attaque de ladite aube.

5. Segment selon la revendication 1, comprenant une entrée d'air (48) conduisant à ladite cavité de bord de fuite pour permettre l'écoulement d'air de refroidissement dans ladite cavité de bord de fuite, ledit bord de fuite comportant une pluralité de trous (68) espacés les uns des autres sur la longueur du bord de fuite en communication avec l'air présent dans ladite cavité de bord de fuite pour refroidir par film les surfaces extérieures de bord de fuite de ladite aube.

6. Segment selon la revendication 5, dans lequel ledit bord de fuite a un bout (71) le long de la longueur de ladite aube, et une pluralité de trous (70) espacés les uns des autres le long dudit bout en communication avec l'air présent dans ladite cavité de bord de fuite pour refroidir le bout de bord de fuite et s'écouler directement dans le trajet de gaz chauds de la turbine.

7. Segment selon la revendication 1, dans lequel ledit espace intérieur de ladite paroi intérieure comprend des première et deuxième chambres (84, 86) sur les côtés opposés d'une plaque d'impact située dans ledit espace intérieur comportant une pluralité d'ouvertures (82) la traversant, ladite une cavité étant en communication avec ladite première chambre pour permettre l'écoulement de vapeur par lesdites ouvertures de plaque d'impact pour passer dans ladite deuxième chambre pour refroidir par impact ladite paroi intérieure, ladite autre cavité étant en communication avec ladite deuxième chambre pour renvoyer la vapeur de refroidissement par impact usée à ladite sortie via ladite autre cavité.

8. Segment selon la revendication 1, dans lequel ledit espace intérieur (80a) comprend une chambre (114) pour recevoir de l'air de ladite cavité de bord d'attaque, une plaque d'impact (116) comportant des ouvertures la traversant dans ledit espace intérieur pour faire s'écouler de l'air de refroidissement fourni à ladite chambre via lesdites ouvertures pour refroidir par impact ladite paroi intérieure.

9. Segment selon la revendication 8, dans lequel ladite paroi intérieure comporte une pluralité de trous (120) la traversant pour permettre l'écoulement d'air de refroidissement de post-impact provenant dudit espace intérieur par lesdits trous pour refroidir par film la paroi intérieure le long dudit trajet de gaz chauds.

10. Segment selon la revendication 1, dans lequel ladite cavité de bord d'attaque comprend une entrée d'air (46), ledit bord d'attaque comportant une pluralité de trous (66) pour faire s'écouler de l'air de refroidissement depuis ladite cavité de bord d'attaque par lesdits trous pour refroidir par film les surfaces extérieures du bord d'attaque de ladite aube, une entrée d'air (48) menant à ladite cavité de bord de fuite pour faire s'écouler de l'air de refroidissement dans ladite cavité de bord de fuite, ledit bord de fuite comportant une pluralité de trous (68) espacés les uns des autres le long de la longueur du bord de fuite en communication avec l'air présent dans ladite cavité de bord de fuite pour refroidir par film les surfaces extérieures du bord de fuite de ladite aube, ladite cavité de bord de fuite incluant des générateurs de tourbillons (72) pour créer un écoulement turbulent dans ladite cavité de bord de fuite.

11. Segment d'aube de turbine comprenant :
des parois intérieure et extérieure (14, 16) espacées l'une de l'autre ;
une aube (12) s'étendant entre lesdites parois intérieure et extérieure et ayant un bord d'attaque et un bord de fuite (18, 20), ladite aube comprenant une pluralité de cavités discrètes (22, 24, 26, 28, 30, 32, 34, 36) entre les bord d'attaque et bord de fuite et s'étendant dans le sens de la longueur de ladite aube pour l'écoulement d'agents de refroidissement ;
une paire desdites cavités (22, 36) comprenant des cavités adjacentes audit bord d'attaque et audit bord de fuite, respectivement, pour faire s'écouler de l'air de refroidissement afin de refroidir les bords d'attaque et de fuite respectifs ;
au moins deux des cavités de ladite pluralité de cavités (32, 34) disposées entre lesdites cavités de bords d'attaque et de fuite et comportant des manchons insérés (98, 90) dedans, lesdits manchons s'étendant substantiellement entre lesdites parois intérieure et extérieure et comportant des ouvertures les traversant, ladite paroi intérieure comportant un espace intérieur (80) et lesdites deux cavités communiquant l'une avec l'autre via ledit espace intérieur ;
ladite paroi extérieure comportant une entrée (42) permettant l'écoulement de vapeur dans l'une desdites deux cavités (32) et une sortie (44) permettant l'écoulement de la vapeur de refroidissement usée d'une autre desdites deux cavités (24), la vapeur présente dans lesdites deux cavités passant dans lesdits manchons insérés via lesdites ouvertures pour refroidir par impact les parois latérales de ladite aube ;
ladite cavité de bord d'attaque comprenant une entrée d'air (46), ledit bord d'attaque comportant une pluralité de trous (66) pour permettre l'écoulement d'air de refroidissement depuis ladite cavité de bord d'attaque par lesdits trous pour refroidir par film les surfaces externes du bord d'attaque de ladite aube.

12. Segment selon la revendication 11, dans lequel lesdits trous forment un angle par rapport à la longueur de ladite aube.

13. Segment selon la revendication 11, comprenant un manchon inséré (64) dans ladite cavité de bord d'attaque à distance des surfaces de paroi intérieure dudit bord d'attaque et en communication avec ladite entrée d'air, ledit manchon inséré comportant une pluralité d'ouvertures le traversant pour l'écoulement de l'air provenant de ladite entrée de cavité de bord d'attaque par lesdites ouvertures de manchon dans l'espace situé entre ledit manchon et lesdites surfaces de paroi intérieure pour refroidir par impact lesdites surfaces de paroi intérieure dudit bord d'attaque avant de faire d'écouler l'air de refroidissement par les trous dudit bord d'attaque pour refroidir par film les surfaces extérieures du bord d'attaque de l'aube.

14. Segment selon la revendication 11, comprenant une entrée d'air (48) conduisant à ladite cavité de bord de fuite pour permettre l'écoulement d'air de refroidissement dans ladite cavité de bord de fuite, ledit bord de fuite comportant une pluralité de trous (68) espacés les uns des autres sur la longueur du bord de fuite en communication avec l'air présent dans ladite cavité de bord de fuite pour refroidir par film les surfaces extérieures de bord de fuite de ladite aube.

15. Segment selon la revendication 14, dans lequel ledit bord de fuite a un bout le long de la longueur de ladite aube, et une pluralité de trous espacés les uns des autres le long dudit bout en communication avec l'air présent dans ladite cavité de bord de fuite pour refroidir le bout de bord de fuite et s'écouler directement dans le trajet de gaz chauds de la turbine.

16. Segment selon la revendication 11, dans lequel ledit espace intérieur de ladite paroi intérieure (16) comprend des première et deuxième chambres (84, 86) sur les côtés opposés d'une plaque d'impact située dans ledit espace intérieur comportant une pluralité d'ouvertures (82) la traversant, ladite une cavité étant en communication avec ladite première chambre pour permettre l'écoulement de vapeur par lesdites ouvertures de plaque d'impact pour passer dans ladite deuxième chambre pour refroidir par impact ladite paroi intérieure, ladite autre cavité étant en communication avec ladite deuxième chambre pour renvoyer la vapeur de refroidissement par impact usée à ladite sortie via ladite autre cavité.

17. Segment selon la revendication 11, dans lequel ledit espace intérieur (80a) comprend une chambre (114) pour recevoir de l'air de ladite cavité de bord d'attaque, une plaque d'impact (116) comportant des ouvertures la traversant dans ledit espace intérieur pour faire s'écouler de l'air de refroidissement fourni à ladite chambre via lesdites ouvertures pour refroidir par impact ladite paroi intérieure.

18. Segment selon la revendication 17, dans lequel ladite paroi intérieure comporte une pluralité de trous (120) la traversant pour permettre l'écoulement d'air de refroidissement de post-impact provenant dudit espace intérieur par lesdits trous pour refroidir par film la paroi intérieure le long dudit trajet de gaz chauds.
